# EUROPÄISCHE PATENTSCHRIFT

(11) **EP 3 430 348 B1**
(45) Veröffentlichungstag und Bekanntmachung des Hinweises auf die Patenterteilung: **13.04.2022**
(21) Anmeldenummer: 17706432.6
(22) Anmeldetag: 16.02.2017
(51) Int. Cl.: G01B 7/16, G01L 1/18, G01L 1/22, G01L 5/162

(54) **MESSEINRICHTUNG, KRAFTFAHRZEUG UND VERFAHREN ZUM ERFASSEN EINER MOMENTANEN VERFORMUNG EINES BAUTEILS**
MEASURING DEVICE, MOTOR VEHICLE, AND METHOD FOR DETECTING INSTANTANEOUS DEFORMATION OF A COMPONENT
DISPOSITIF DE MESURE, VÉHICULE AUTOMOBILE ET PROCÉDÉ DE DÉTECTION D'UNE DÉFORMATION MOMENTANÉE D'UN ÉLÉMENT

(30) Priorität: 18.03.2016 DE 102016204557
(43) Veröffentlichungstag der Anmeldung: 23.01.2019
(73) Patentinhaber: ZF Friedrichshafen AG, 88046 Friedrichshafen (DE)
(72) Erfinder: KLANK, Michael, 49084 Osnabrück (DE); LUNDBERG, Alexander, 49324 Melle (DE); HASKAMP, Klaus, 49413 Dinklage (DE); ELBERS, Christoph, 32351 Stemwede (DE)
(74) Vertreter: ZF Friedrichshafen AG
(86) Internationale Anmeldenummer: PCT/EP2017/053497
(87) Internationale Veröffentlichungsnummer: WO 2017/157605

(56) Entgegenhaltungen:
- WO-A1-2004/065926
- WO-A1-2011/079390
- US-A1- 2006 010 996
- US-A1- 2007 062 300

## Beschreibung

Die Erfindung betrifft eine Messeinrichtung zum Erfassen einer momentanen Verformung eines Bauteils, insbesondere Fahrwerksbauteils oder Getriebebauteils, aufweisend wenigstens eine an dem Bauteil befestigbare Sensoreinrichtung und wenigstens eine signaltechnisch mit der Sensoreinrichtung verbundene Messelektronik, wobei die Messelektronik eingerichtet ist, aus elektrischen Widerstandsmessungen an der Sensoreinrichtung die momentane Verformung des Bauteils zu ermitteln. Die erfindungsgemäße Messeinrichtung ist im Anspruch 1 beansprucht.

Ferner betrifft die Erfindung ein Kraftfahrzeug nach Anspruch 3 und ein Verfahren nach Anspruch 4.

Es ist bekannt, Dehnungsmessstreifen zur Messung einer momentanen Verformung eines Bauteils zu verwenden, um hieraus die an diesem Bauteil angreifenden und die Verformung hervorrufenden Kräfte zu bestimmen. Ein Dehnungsmessstreifen kann hierzu auf das Bauteil aufgeklebt werden, wobei die das Bauteil dehnenden Kräfte durch die Verklebung auf den Dehnungsmessstreifen übertragen werden. Jedoch kann die Verklebung durch Alterung ihre übertragende Wirkung verändern, was die Messung der momentanen Verformung des Bauteils verfälscht.

Es ist des Weiteren bekannt, zur Messung einer momentanen Verformung des Bauteils dessen magnetostriktiven Eigenschaften zu nutzen. Hierbei wird das Bauteil so magnetisiert, dass ohne einwirkende mechanische Kräfte keine Magnetfelder aus dem Bauteil austreten. Je stärker die an dem Bauteil angreifenden Kräfte sind bzw. je stärker die dadurch bewirkte momentane Verformung des Bauteils ist, umso mehr Magnetfeldlinien treten aus dem Bauteil aus. Diese Magnetfeldlinien können dann zur Messung der momentanen Verformung des Bauteils erfasst werden. Jedoch ist dieses magnetostriktive Messverfahren relativ störempfindlich gegenüber externen Störfeldern, so dass es auch hier zu einer falschen Messung der momentanen Verformung des Bauteils kommen kann.

Häufig ist eine Messung in Kraftrichtung von Bedeutung. Dehnungsmesstreifen haben gegenüber magnetostriktiven Verfahren zwar den Vorteil, dass sie Dehnungen und Stauchungen in bestimmten Richtungen messen können, jedoch muss für jede Richtung ein für die jeweilige Beanspruchung zuständiger eigener Dehnungsmessstreifen auf das Bauteil aufgeklebt werden.

Aus US 2013/0118267 A1 ist ein an einem Bauteil befestigbarer Belastungssensor bekannt, der eine Sensorschicht aufweist, die einen Polymerwerkstoff und darin eingebettete, elektrisch leitfähige Kohlenstoffnanoröhrchen (Carbon-Nano-Tubes; CNT) aufweist. Mit diesem Belastungssensor kann eine momentane Verformung des Bauteils gemessen werden.

Die WO 2004/065926 A1 offenbart einen Sensor mit einer Sensorschicht, die Kohlenstoffnanoröhrchen aufweist, wobei Elektroden zum Ausbilden von Messkontakten am Rand der Sensorschicht angeordnet sind.

Der WO 2011/079390 A1 ist eine Sensoreinrichtung mit einer Sensorschicht mit Kohlenstoffnanoröhrchen zu entnehmen, wobei die Sensorschicht zwischen zwei Elektroden angeordnet ist. Eine Vielzahl von derartigen einzelnen Sensoreinrichtungen kann zum Ausbilden eines Sensorfeldes verwendet werden.

Auch der US 2006/0010996 A ist eine Sensoreinrichtung zu entnehmen, bei der zwischen zwei Elektroden eine Sensorschicht mit Kohlenstoffnanoröhrchen angeordnet ist.

Die US 2007/0062300 A1 offenbart die Verwendung einer Vielzahl von einzelnen Sensoreinrichtungen zum Ausbilden eines Sensorfeldes.

Eine Aufgabe der Erfindung ist es, eine verbesserte Messung einer momentanen Verformung eines Bauteils zu ermöglichen.

Diese Aufgabe wird durch die unabhängigen Patentansprüche gelöst. Vorteilhafte Ausgestaltungen sind insbesondere in den abhängigen Patentansprüchen angegeben, die jeweils für sich genommen oder in verschiedener Kombination miteinander einen weiterbildenden oder vorteilhaften Aspekt der Erfindung darstellen können.

Die erfindungsgemäße Messeinrichtung zum Erfassen einer momentanen Verformung eines Bauteils weist wenigstens eine an dem Bauteil befestigbare Sensorschicht und wenigstens eine signaltechnisch mit der Sensoreinrichtung verbundene Messelektronik auf, wobei die Messelektronik eingerichtet ist, aus elektrischen Widerstandsmessungen an der Sensoreinrichtung die momentane Verformung des Bauteils zu ermitteln. Die Sensoreinrichtung zum Messen einer momentanen Verformung eines Bauteils, insbesondere Fahrwerkbauteils oder Getriebebauteils, umfasst wenigstens eine an dem Bauteil befestigbare Sensorschicht, die einen Trägerwerkstoff, insbesondere einen Polymerwerkstoff, und darin eingebettete, elektrisch leitfähige Partikel aufweist, und wenigstens drei Kontaktpaare mit jeweils zwei beabstandet zueinander an der Sensorschicht angeordneten, elektrischen Messkontakten, wobei die Kontaktpaare derart relativ zueinander angeordnet sind, dass momentane Verformungen der Sensorschicht in wenigstens drei verschiedenen Richtungen über elektrische Widerstandsmessungen ermittelbar sind. An der Sensorschicht ist eine Vielzahl von zueinander beabstandeten Messkontakten angeordnet, wobei die Messkontakte in einem regelmäßigen Muster matrixartig angeordnet sind, wobei die Messelektronik eingerichtet ist, momentan auf das Bauteil wirkende Kräfte zu ermitteln, und wobei die Sensorschicht insgesamt neun elektrische Messkontakte aufweist, die in Gestalt einer 3x3-Matrix zueinander angeordnet sind.

Es kann somit lediglich mittels einer Sensoreinrichtung die momentane Verformung des Bauteils in wenigstens drei Richtungen ermittelt werden. Bei der momentanen Verformung des Bauteils kann es sich um eine elastische oder plastische Verformung des Bauteils handeln. Die Sensorschicht ermöglicht prinzipiell eine Messung von elektrischen Widerstandsmessungen in beliebig vielen Richtungen, da die Sensorschicht in allen Richtungen gleich empfindlich ist. In welcher Richtung letztendlich eine elektrische Widerstandsmessung erfolgt, kann durch die jeweilige Anordnung der Kontaktelemente relativ zueinander bzw. relativ zur Sensorschicht festgelegt werden. Aus der aus den elektrischen Widerstandsmessungen ermittelten momentanen Verformung der Sensorschicht in wenigstens drei verschiedenen Richtungen wird die momentane Verformung des Bauteils ermittelt. Hierbei entspricht die momentane Verformung der Sensorschicht nach Möglichkeit der momentanen Verformung des Bauteils. Bei einer elektrischen Widerstandsmessung wird der elektrische Widerstand zwischen zwei Messkontakten eines Kontaktpaars gemessen. Die Kontaktpaare unterscheiden sich insbesondere durch zumindest einen nicht gemeinsamen Messkontakt voneinander.

Der Trägerwerkstoff ist bevorzugt ein Kunststoff. Bei einem Polymerwerkstoff der Sensorschicht handelt es sich um einen elastisch verformbaren Polymerwerkstoff. Die elektrisch leitfähigen Partikel können in verschiedener Größe und Orientierung in der Sensorschicht angeordnet sein. Der Trägerwerkstoff ist insbesondere geeignet die Partikel vor äußeren Einflüssen (Temperatur, Schmutz, Feuchtigkeit) geschützt aufzunehmen und weist gute Hafteigenschaften auf, so dass während der Lebensdauer des Bauteils eine Widerstandsmessung ermöglicht ist.

Die Sensoreinrichtung kann drei oder mehrere Kontaktpaare mit jeweils zwei beabstandet zueinander an der Sensorschicht angeordneten, elektrischen Messkontakten aufweisen. Dabei können einzelne Messkontakte Teil mehrerer Kontaktpaare sein. Es müssen jedoch mindestens drei Messkontakte vorhanden sein, um drei Kontaktpaare ausbilden zu können.

Die Sensoreinrichtung kann auch zwei oder mehrere an verschiedenen Abschnitten des Bauteils angeordnete Sensorschichten mit daran angeordneten Messkontakten aufweisen.

Die Sensoreinrichtung kann auf einem Fahrwerkbauteil, wie z.B. einem Lenker oder Pendelstütze aufgebracht sein. Ebenso kann die Sensoreinrichtung auf einer Welle oder eines Hebels eines Getriebes angeordnet sein. Es kann so die Schub-, Druck- oder Zugbelastung oder auch die Torsion des betreffenden Bauteils ermittelt werden, wie später noch näher erläutert wird.

Gemäß einer vorteilhaften Ausgestaltung sind die elektrisch leitfähigen Partikel als Kohlenstoffnanoröhrchen ausgebildet. Hierdurch eignet sich die Sensorschicht optimal zur Messung der momentanen elastischen Verformung des Bauteils in wenigstens drei Richtungen. Die Kohlenstoffnanoröhrchen sind innerhalb des Polymerwerkstoffs isotrop ausgerichtet und verteilt.

Nach einer weiteren vorteilhaften Ausgestaltung ist die Sensorschicht stoffschlüssig mit dem Bauteil verbunden. Hierbei kann die Sensorschicht unmittelbar oder über eine Verklebung mittelbar stoffschlüssig mit dem Bauteil verbunden sein.

Vorteilhafterweise ist die Sensorschicht als Beschichtung ausgebildet. Beispielsweise kann die Sensorschicht als Anstrich ausgebildet sein. Alternativ kann die Sensorschicht durch Aufsprühen ihres Werkstoffs auf das Bauteil ausgebildet werden.

Die erfindungsgemäße Ausgestaltung sieht vor, dass an der Sensorschicht eine Vielzahl von zueinander beabstandeten Messkontakten angeordnet ist, wobei die Messkontakte in einem regelmäßigen Muster angeordnet sind. Dies macht es möglich, dass nach der Anordnung der Sensorschicht an dem Bauteil Kontaktpaare ausgewählt werden, die eine Messung der momentanen Verformungen des Bauteils in den gewünschten Richtungen ermöglichen. Hierbei sind die Messkontakte matrixartig an der Sensorschicht angeordnet.

Eine erfindungsgemäße Messeinrichtung zum Erfassen einer momentanen Verformung eines Bauteils, insbesondere Fahrwerksbauteils, umfasst wenigstens eine an dem Bauteil befestigbare Sensoreinrichtung und wenigstens eine signaltechnisch mit der Sensoreinrichtung verbundene Messelektronik, wobei die Messelektronik eingerichtet ist, aus elektrischen Widerstandsmessungen an der Sensoreinrichtung die momentane Verformung des Bauteils zu ermitteln. Erfindungsgemäß ist die Sensoreinrichtung nach einer der vorgenannten Ausgestaltungen oder einer beliebigen Kombination von wenigstens zwei dieser Ausgestaltungen miteinander ausgebildet.

Mit der Messeinrichtung sind die oben mit Bezug auf die Sensoreinrichtung genannten Vorteile entsprechend verbunden. Die Messeinrichtung kann auch zwei oder mehrere an verschiedenen Abschnitten des Bauteils befestigbare Sensoreinrichtungen aufweisen. Die Messeinrichtung kann für jede Sensoreinrichtung eine eigene Messelektronik oder für wenigstens zwei Sensoreinrichtungen eine gemeinsame Messelektronik aufweisen. Die Messelektronik kann kabelgebunden oder kabellos signaltechnisch mit der Sensoreinrichtung verbunden sein. Die Messelektronik kann durch eine vorhandene Fahrzeugelektronik oder separat davon ausgebildet sein. Die Messelektronik kann eingerichtet sein, ein Signal zu erzeugen, wenn eine ermittelte momentane Verformung des Bauteils einen vorgegebenen Grenzwert überschreitet.

Gemäß einer vorteilhaften Ausgestaltung ist die Messelektronik eingerichtet, aus den elektrischen Widerstandsmessungen an der Sensoreinrichtung eine momentan auf das Bauteil einwirkende Zugkraft, Druckkraft und/oder Biegekraft zu ermitteln. Beispielsweise kann eine auf das Bauteil einwirkende Zugkraft aus einer gemessenen Dehnung der Sensorschicht und damit des Bauteils ermittelt werden. Eine auf das Bauteil einwirkende Druckkraft kann aus einer gemessenen Stauchung der Sensorschicht und damit des Bauteils ermittelt werden. Ebenso kann eine auf das Bauteil einwirkende Biegekraft aus einem an der Sensorschicht bzw. dem Bauteil gemessenen Biegemoment bestimmt werden. Alternativ kann die Biegekraft aus einer in einer Richtung gemessenen Dehnung und einer in dieser Richtung gemessenen Stauchung der Sensorschicht bzw. des Bauteils ermittelt werden. Des Weiteren ist es auch möglich die Torsion eines Bauteils, wie Fahrwerklenker oder einer Welle, zu messen. Die Sensorschicht tordiert bei entsprechender Belastung auf dem Bauteil mit, so dass auch diese Art der Belastung bestimmt werden kann.

Erfindungsgemäß ist die Messelektronik eingerichtet, momentan an dem Bauteil angreifende Kräfte ortsabhängig zu ermitteln. Dadurch ist es insbesondere möglich, auf das Bauteil einwirkende Biegekräfte einerseits und Zugkräfte und/oder Druckkräfte andererseits getrennt voneinander zu messen.

Ein erfindungsgemäßes Kraftfahrzeug umfasst ein Fahrwerk und wenigstens eine Messeinrichtung nach einer der vorgenannten Ausgestaltungen oder einer beliebigen Kombination von wenigstens zwei dieser Ausgestaltungen miteinander, wobei die Sensorschicht an einem Bauteil des Fahrwerks befestigt ist.

Mit dem Kraftfahrzeug sind die oben mit Bezug auf die Sensoreinrichtung bzw. die Messeinrichtung genannten Vorteile entsprechend verbunden. Das Kraftfahrzeug kann insbesondere ein Personenkraftwagen sein.

Ein erfindungsgemäßes Verfahren zum Erfassen einer momentanen Verformung eines Bauteils, insbesondere Fahrwerksbauteils oder Getriebebauteils, mit einer erfindungsgemäßen Messeinrichtung, umfasst die Schritte:
- Messen von momentanen elektrischen Widerstandswerten der Sensorschicht zwischen jeweiligen elektrischen Messkontakten von wenigstens drei Kontaktpaaren; und
- Ermitteln der momentanen Verformung des Bauteils in wenigstens drei verschiedenen Richtungen aus den gemessenen momentanen elektrischen Widerstandswerten.

Mit dem Verfahren sind die oben mit Bezug auf die Sensoreinrichtung genannten Vorteile entsprechend verbunden. Insbesondere kann die Sensoreinrichtung zur Durchführung des Verfahrens verwendet werden.

Eine bevorzugte Ausführungsform der Erfindung wird nachfolgend anhand der beiliegenden Figur näher erläutert. Diese zeigt:

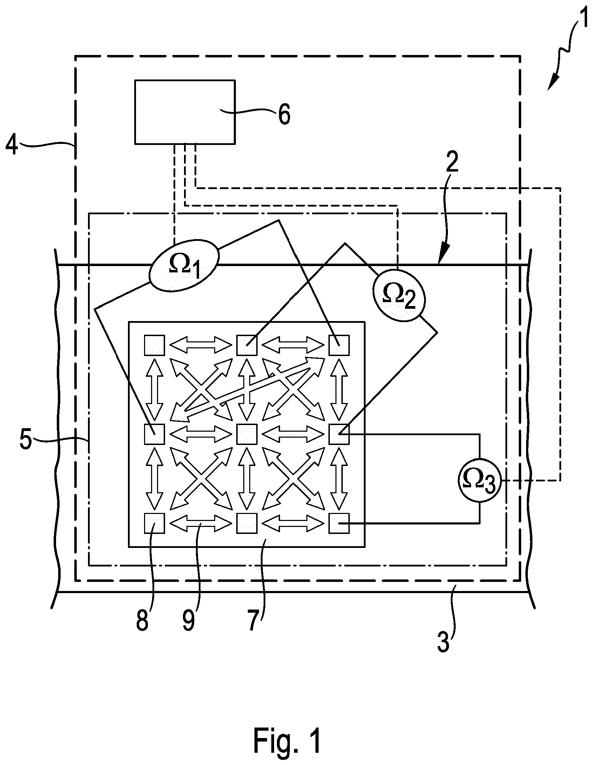

- Fig. 1: eine schematische Darstellung eines Ausführungsbeispiels für ein Kraftfahrzeug.

Fig. 1 zeigt eine schematische Darstellung eines Ausführungsbeispiels für ein erfindungsgemäßes Kraftfahrzeug 1. Das Kraftfahrzeug 1 umfasst ein Fahrwerk 2, von dem in Fig. 1 lediglich ein Fahrwerksbauteil 3 gezeigt ist.

Des Weiteren umfasst das Kraftfahrzeug 1 wenigstens eine Messeinrichtung 4 zum Erfassen einer momentanen Verformung des Fahrwerksbauteils 3. Die Messeinrichtung 4 umfasst eine an dem Fahrwerksbauteil 3 befestigte Sensoreinrichtung 5 zum Messen der momentanen Verformung des Fahrwerkbauteils 3 und eine signaltechnisch mit der Sensoreinrichtung 5 verbundene Messelektronik 6. Die Messelektronik 6 ist eingerichtet, aus elektrischen Widerstandsmessungen an der Sensoreinrichtung 5 die momentane Verformung des Fahrwerksbauteils 3 zu ermitteln. Insbesondere kann die Messelektronik 6 eingerichtet sein, aus den elektrischen Widerstandsmessungen an der Sensoreinrichtung 5 eine momentan auf das Fahrwerksbauteil 3 einwirkende Zugkraft, Druckkraft und/oder Biegekraft zu ermitteln. Zudem ist die Messelektronik eingerichtet, momentan auf das Fahrwerksbauteil 3 einwirkende Kräfte ortsabhängig bzw. ortsaufgelöst zu ermitteln.

Die Sensoreinrichtung 5 umfasst eine an dem Fahrwerksbauteil 3 befestigte Sensorschicht 7, die einen Polymerwerkstoff und darin eingebettete, elektrisch leitfähigen nicht gezeigte Partikel aufweist. Die elektrisch leitfähigen Partikel sind als Kohlenstoffnanoröhrchen ausgebildet. Die Sensorschicht 7 ist stoffschlüssig mit dem Fahrwerksbauteil 3 verbunden. Hierzu kann die Sensorschicht 7 als Beschichtung ausgebildet sein.

Die Sensoreinrichtung 5 erlaubt die Bildung mehrerer Kontaktpaare mit jeweils zwei beabstandet zueinander an der Sensorschicht 7 angeordneten, elektrischen Messkontakten 8. Einzelne Kontaktpaare sind dabei vorliegend durch die zwischen jeweils zwei Messkontakten 8 angeordneten Doppelpfeile 9 angedeutet. An der Sensorschicht 7 ist somit eine Vielzahl von zueinander beabstandeten Messkontakten 8 angeordnet, wobei die Messkontakte 8 in einem regelmäßigen Muster angeordnet sind. Die Kontaktpaare sind derart relativ zueinander angeordnet, dass momentane Verformungen der Sensorschicht 5 in wenigstens drei verschiedenen Richtungen über elektrische Widerstandsmessungen ermittelbar sind.

Bei dem in Fig. 1 gezeigten Ausführungsbeispiel werden drei verschiedene elektrische Widerstandswerte Ω₁, Ω₂ und Ω₃ erfasst und der Messelektronik 6 zugeführt. Somit erfolgen elektrische Widerstandsmessungen in drei verschiedenen Richtungen. Diese Richtungen sind relativ zueinander unter von 90°abweichenden Winkeln ausgerichtet.

### Bezugszeichen

- 1: Kraftfahrzeug
- 2: Fahrwerk
- 3: Fahrwerksbauteil
- 4: Messeinrichtung
- 5: Sensoreinrichtung
- 6: Messelektronik
- 7: Sensorschicht
- 8: Messkontakt
- 9: Doppelpfeil (Kontaktpaar)
- Ω₁: elektrischer Widerstandswert
- Ω₂: elektrischer Widerstandswert
- Ω₃: elektrischer Widerstandswert

## Patentansprüche

1. Messeinrichtung (4) zum Erfassen einer momentanen Verformung eines Bauteils (3) aufweisend wenigstens eine an dem Bauteil (3) befestigbare Sensoreinrichtung (5) und wenigstens eine signaltechnisch mit der Sensoreinrichtung (5) verbundene Messelektronik (6), wobei die Messelektronik (6) eingerichtet ist, aus elektrischen Widerstandsmessungen an der Sensoreinrichtung (5) die momentane Verformung des Bauteils (3) zu ermitteln, wobei die Sensoreinrichtung (5) zum Messen der momentanen Verformung des Bauteils (3) wenigstens eine an dem Bauteil (3) befestigbare Sensorschicht (7) aufweist, die einen Trägerwerkstoff und darin eingebettete, elektrisch leitfähige Partikel aufweist, und wenigstens drei Kontaktpaare mit jeweils zwei beabstandet zueinander an der Sensorschicht (7) angeordneten, elektrischen Messkontakten (8), wobei die Kontaktpaare derart relativ zueinander angeordnet sind, dass momentane Verformungen der Sensorschicht (7) in wenigstens drei verschiedenen Richtungen über elektrische Widerstandsmessungen ermittelbar sind, und an der Sensorschicht (7) eine Vielzahl von zueinander beabstandeten Messkontakten (8) angeordnet ist, wobei die Messkontakte (8) in einem regelmäßigen Muster matrixartig angeordnet sind, **dadurch gekennzeichnet, dass** die Messelektronik (6) eingerichtet ist, momentan auf das Bauteil (3) einwirkende Kräfte ortsabhängig zu ermitteln, wobei die Sensorschicht (7) insgesamt neun elektrische Messkontakte (8) aufweist, die in Gestalt einer 3x3-Matrix zueinander angeordnet sind.

2. Messeinrichtung (4) nach Anspruch 1, **dadurch gekennzeichnet, dass** die Messelektronik (6) eingerichtet ist, aus den elektrischen Widerstandsmessungen an der Sensoreinrichtung (5) eine momentan auf das Bauteil (5) einwirkende Zugkraft, Druckkraft und/oder Biegekraft zu ermitteln.

3. Kraftfahrzeug (1) mit einem Fahrwerk (2), **gekennzeichnet durch** wenigstens eine Messeinrichtung (4) nach einem der Ansprüche 1 oder 2, wobei die Sensorschicht (7) an einem Bauteil (3) des Fahrwerks (2) befestigt ist.

4. Verfahren zum Erfassen einer momentanen Verformung eines Bauteils (3) mit einer Messeinrichtung nach einem der Ansprüche 1 oder 2, aufweisend die Schritte:
- Messen von momentanen elektrischen Widerstandswerten (Ω₁, Ω₂, Ω₃) der Sensorschicht (7) zwischen jeweiligen elektrischen Messkontakten (8) von wenigstens drei Kontaktpaaren; und
- Ermitteln der momentanen Verformung des Bauteils (3) in wenigstens drei verschiedenen Richtungen aus den gemessenen momentanen elektrischen Widerstandswerten (Ω₁, Ω₂, Ω₃).

## Claims

1. Measuring device (4) for capturing instantaneous deformation of a component (3), having at least one sensor device (5), which can be fastened to the component (3), and at least one measuring electronic system (6), which is connected to the sensor device (5) for signalling purposes, wherein the measuring electronic system (6) is configured to determine the instantaneous deformation of the component (3) from electrical resistance measurements at the sensor device (5), wherein, in order to measure the instantaneous deformation of the component (3), the sensor device (5) has at least one sensor layer (7), which can be fastened to the component (3) and has a carrier material and electrically conductive particles embedded therein, and at least three contact pairs each with two electrical measuring contacts (8) arranged at a distance from one another on the sensor layer (7), wherein the contact pairs are arranged relative to one another in such a manner that it is possible to determine instantaneous deformations of the sensor layer (7) in at least three different directions using electrical resistance measurements, and a multiplicity of measuring contacts (8) spaced apart from one another are arranged on the sensor layer (7), wherein the measuring contacts (8) are arranged in a matrix-like manner in a regular pattern, **characterized in that** the measuring electronic system (6) is configured to determine forces instantaneously acting on the component (3) in a location-dependent manner, wherein the sensor layer (7) has a total of nine electrical measuring contacts (8) which are arranged in the form of a 3x3 matrix with respect to one another.

2. Measuring device (4) according to Claim 1, **characterized in that** the measuring electronic system (6) is configured to determine a tensile force, compressive force and/or bending force instantaneously acting on the component (3) from the electrical resistance measurements at the sensor device (5).

3. Motor vehicle (1) having a chassis (2), **characterized by** at least one measuring device (4) according to either of Claims 1 and 2, wherein the sensor layer (7) is fastened to a component (3) of the chassis (2) .

4. Method for capturing instantaneous deformation of a component (3) using a measuring device according to either of Claims 1 and 2, having the steps of:
- measuring instantaneous electrical resistance values (Ω₁, Ω₂, Ω₃) of the sensor layer (7) between respective electrical measuring contacts (8) of at least three contact pairs; and
- determining the instantaneous deformation of the component (3) in at least three different directions from the measured instantaneous electrical resistance values (Ω₁, Ω₂, Ω₃).

## Revendications

1. Dispositif de mesure (4) destiné à détecter une déformation momentanée d'un élément structural (3), possédant au moins un dispositif capteur (5) pouvant être fixé à l'élément structural (3) et au moins une électronique de mesure (6) reliée de manière signalétique au dispositif capteur (5), l'électronique de mesure (6) étant conçue pour déterminer la déformation momentanée de l'élément structural (3) à partir de mesures de la résistance électrique au niveau du dispositif capteur (5), le dispositif capteur (5), pour mesurer la déformation momentanée de l'élément structural (3), possédant au moins une couche de capteur (7) pouvant être fixée à l'élément structural (3), laquelle possède un matériau porteur et des particules électriquement conductrices incorporées dans celui-ci, et au moins trois paires de contacts comportant respectivement deux contacts de mesure (8) électriques disposés espacés l'un de l'autre sur la couche de capteur (7), les paires de contacts étant disposées les unes par rapport aux autres de telle sorte que les déformations momentanées de la couche de capteur (7) dans au moins trois directions différentes peuvent être déterminées par le biais de mesures de la résistance électrique, et une pluralité de contacts de mesure (8) espacés les uns des autres étant disposés sur la couche de capteur (7), les contacts de mesure (8) étant disposés à la manière d'une matrice dans un modèle régulier, **caractérisé en ce que** l'électronique de mesure (6) est conçue pour déterminer les forces agissant momentanément sur l'élément structural (3) en fonction de l'endroit, la couche de capteur (7) possédant en tout neuf contacts de mesure (8) électriques qui sont disposés sous la forme d'une matrice 3x3 les uns par rapport aux autres.

2. Dispositif de mesure (4) selon la revendication 1, **caractérisé en ce que** l'électronique de mesure (6) est conçue pour déterminer, à partir des mesures de la résistance électrique au niveau du dispositif capteur (5), une force de traction, une force de pression et/ou une force de flexion agissant momentanément sur l'élément structural (3).

3. Véhicule automobile (1), comprenant un train roulant (2), **caractérisé par** au moins un dispositif de mesure (4) selon l'une des revendications 1 ou 2, la couche de capteur (7) étant fixée à un élément structural (3) du train roulant (2).

4. Procédé de détection d'une déformation momentanée d'un élément structural (3) avec un dispositif de mesure selon l'une des revendications 1 ou 2, comprenant les étapes suivantes :
- mesure de valeurs momentanées de la résistance électrique (Ω₁, Ω₂, Ω₃) de la couche de capteur (7) entre les contacts de mesure (8) électriques respectifs d'au moins trois paires de contacts ; et
- détermination de la déformation momentanée de l'élément structural (3) dans au moins trois directions différentes à partir des valeurs momentanées de la résistance électrique (Ω₁, Ω₂, Ω₃) mesurées.
